# EUROPEAN PATENT APPLICATION

(11) **EP 3 109 491 A1**
(43) Date of publication of application: **28.12.2016**
(21) Application number: 16153982.0
(22) Date of filing: 02.02.2016
(51) Int. Cl.: F16B 23/00

(54) **TYPE OF BOLT HEAD WITH ANGULAR FEATURE**

(30) Priority: 03.02.2015 RO 201500073
(71) Applicant: Ovidiu Stefan, Gogu, 400632 Cluj Napoca (RO)
(72) Inventor: Ovidiu Stefan, Gogu, 400632 Cluj Napoca (RO)

(57) **Abstract**

The present disclosure relates to a type of bolt head designed in such a way as to allow varying sizes of bolt head diameter to a single size drive tool. Bolt assemblies in several models known, have a bolt head, containing a geometric shape with a predetermined size correlated with the shape and size of the drive tool. The bolt head comprises pockets (1) in the form of a polygon with three sides, said pockets defining extrusions (2). Between the extrusions (2) and the pockets (1) drive surfaces (3) for transferring momentum are formed.

## Description

### FIELD

The present disclosure relates to a type of bolt head designed in such a way as to allow varying sizes of bolt head diameter to a single size drive tool. Bolt assemblies in several models known, have a bolt head, containing a geometric shape with a predetermined size correlated with the shape and size of the drive tool.

### BACKGROUND

This section provides background information related to the present disclosure witch is not necessarily prior art.

Threaded assemblies are made up of standardized components including bolt head, shape and size. The current state of art has the following disadvantages:
- Drive of the bolt head by the drive tool is characterized by geometrical shapes, commonly as hexagonal, octagonal, square, star, line, cross or other and the standardized dimension of these shapes, resulting the need for a diversified and numerous drive tool set for working with threaded assemblies;
- The head of the bolt, that has the geometrical shapes, risks deteriorating his edges when tightened.

### SUMMARY

This section provides a general summary of the disclosure, and is not a comprehensive disclosure of its full scope or all its features.

A type of bolt head, with angular feature, used to drive varying diameter sizes of bolt head with one diameter sizes drive tool. The bolt head, described in the disclosure, on the front side, that grips with the drive tool, has a polygonal shape pocket (1) with 2 sides pointing towards the center, of the bolt head rotational axis, and a 3rd side tangent to the margin of the bolt head is unbound. Between extrusion (2) and pocket (1) drive surfaces (3) are formed, showing in the form of letter "V" pointing to the center of the bolt head rotational axis and define the opening pocket angle (4) and opening extrusion angle (5). Between the extrusion (2) defined by pockets (1) is a cut (6) for connecting the front of the bolt head with the drive tool.

The bolt head with angular feature is intended to remedy the disadvantages of the known technical state of the art, in that:
- Drive of multiple diameter sizes of bolt head by one diameter size drive tool is posible due to the specific features, of pockets (1) and extrusions (2), detailed in the disclosure, obviating the need for a diversified and numerous drive tools set;
- Drive surfaces (3) make contact at a plane that is perpendicular to the rotation of the bolt head and the momentum is transferred from the drive tool to the bolt head without damaging edges when tightened.

### DETAILED DESCRIPTION

Example embodiments will now be described more fully with reference to the accompanying drawings. Corresponding reference numerals indicate corresponding parts throughout the several views of the drawings. The problem sought in the disclosure is to provide grip between the bolt head and drive tool so as to allow drive between one diameter size drive tool and several diameter sizes of bolt heads, the diameter of the bolt head is not constrained to certain defaults or standardized dimensions of bolt heads and the grip to be more enduring when tightened because it has on the front side of the bolt head, specific features, of pockets (1) and extrusions (2), as follows.

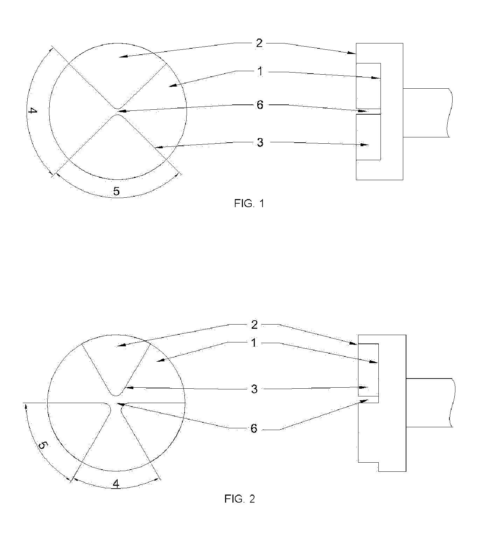

Referring to Figure 1 and Figure 2, gripping between the bolt head and the drive tool is characterized by pockets (1) in the form of a polygon with three sides. Two of these sides point toward the center rotational axis of the bolt head and the third one tangent to the margin of the bolt head is unbound towards the exterior. This ensures that the exceed size of the drive tool head fits the size of the bolt head or that the exceed the size of the bolt head fits the size of the drive tool head. Thanks to this specific features in gripping one tool can drive varying sizes of bolt heads.

Referring again to Figure 1 and Figure 2, extrusions (2) are defined by the pockets (1). Between the extrusions (2) and the pockets (1) drive surfaces (3), that transfer momentum, are formed. Drive surfaces (3) of one pocket (1) form the shape of the letter "V" pointing to the center of the rotational axis of the bolt head. The two sides of the letter "V" create a pocket angle (4) and an extrusion angle (5). These drive surfaces (3) ensure that the momentum is transferred, perpendicular to the bolt head direction of rotation, from and on to the contact surfaces of the bolt head and drive tool, the result being a greater endurance, of these surfaces, when tightened and a reduced risk of deteriorating the edges.

Extrusions (2) defined by the pockets (1) have a cut (6), between them, to allow the grip of the bolt head and the drive tool. The grip is achieved by positioning the extrusions (2) of the drive tool in the pockets (1) of the bolt head and vice versa. The bolt head and the drive tool have the number of pockets (1) and extrusions (2) and the size of the pocket angle (4) and extrusion angle (5) correlated in order to achieve grip.

The advantage in applying the invention is the use of one drive tool for more diameter sizes of bolt head due to the way the drive tool grips with the bolt head. Bolt heads have more endurance when tightened due to the use of the front surface of the bolt head and of the drive surfaces (3) that transfer momentum without deteriorating the edges when tightened.

Example embodiments are provided so that this disclosure will be thorough and will fully convey the scope to those who are skilled in the art. Numerous specific details are set forth, such as examples of specific components to provide a thorough understanding of embodiment of the present disclosure. It will be apparent to those skilled in the art that specific details need not be employed, that example embodiments may be embodied in other different forms, and that neither should be construed to limit the scope of the disclosure. In some example embodiments well-known processes, device structures and technologies are not mentioned in detail.

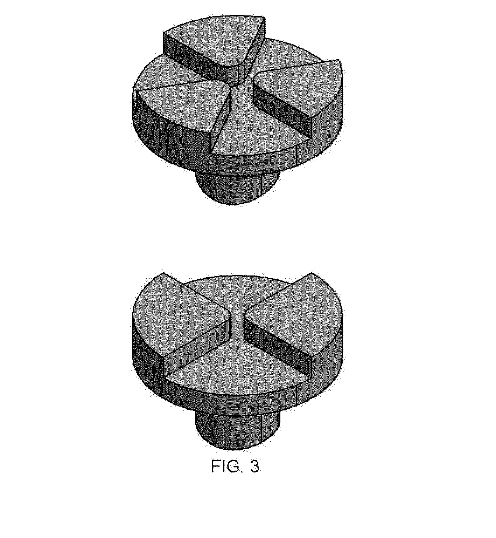

The invention, type of bolt head with angular feature, described in the disclosure, that works by allowing driving, with a better grip, of several diameter sizes bolt head with a single size of drive tool can be made by known methods of machining, punching, erosion or other. Processing is applied to the front of the bolt head to achieve the distinctive peculiarities of the disclosure. These are the pocket (1) in the form of a polygon with two sides pointing toward the center rotational axis of the bolt head and a third side tangent to the margin of the bolt head is unbound towards the exterior. Between the extrusions (2) defined by pockets (1) the drive surfaces (3) are formed, in the shape of letter "V" and have the purpose to transfer the momentum. Extrusions (2) have a cut (6) between them to allows the grip of the bolt head and the drive tool. Also the number of pockets (1) corresponds to the number of extrusions (2) resulted and these pairs of pockets (1) and extrusions (2) can be from two pairs, shown in Figure 1 and Figure 3, three pairs shown in Figure 2 and Figure 3 to more than 3 pairs and that function by the same rules of operation. In this sense the bolt head is designed in such a way that it has the pair of pockets (1) and extrusions (2) and the size of the pocket angle (4) and extrusion angle (5) correlated with the drive tool.

The terminology used herein is for the purpose of describing particular example embodiments only and is not intended to be limiting. As used herein "pocket" (1), "extrusion" (2), "drive surface" (3), "pocket angle" (4), "extrusion angle" (5), "cut" (6) describe shapes as shown in Figure 1, Figure 2 and Figure 3. "Pair of pockets (1) and extrusions (2)" is used to define the way a group of features, described in the disclosure, work. As elements that don't have a limit of repeating themselves on the bolt head. The term "grip" describes the way the drive tool connects with the bolt head. The term "drive" describes the rotation of the drive tool transmitted to the bolt head. The term "bolt head" is not used to limit the scope of the disclosure and it refers to all threaded assemblies and components.

### DRAWINGS

The drawings described herein are for illustrative purposes only of selected embodiment, and not all possible implementations, and are not intended to limit the scope of the present disclosure.
Figure 1 - Front view (left) and side view (right) of the bolt head with two pairs of pockets (1) and extrusions (2) and drive surfaces (3), pocket angle (4), extrusion angle (5) and cut (6) of the present disclosure;
Figure 2 - Front view (left) and side view (right) of the bolt head with three pairs of pockets (1) and extrusions (2) and drive surfaces (3), pocket angle (4), extrusion angle (5), and cut (6) of the present disclosure;
Figure 3 - Abstract view of bolt head with 3 pairs of pockets and extrusions (above), and bolt head with 2 pairs of pockets and extrusions (below).

## Claims

1. Type of bolt head with angular feature comprising of pockets (1) in the form of a polygon with three sides. Two of these sides point toward the center rotational axis of the bolt head and the third one tangent to the margin of the bolt head is unbound towards the exterior. Extrusions (2) are defined by the pockets (1). Between the extrusions (2) and the pockets (1) drive surfaces (3), that transfer momentum, are formed. Drive surfaces (3) of one pocket (1) form the shape of the letter "V" pointing to the center of the rotational axis of the bolt head. The two sides of the letter "V" create a pocket angle (4) and an extrusion angle (5). Extrusions (2) defined by the pockets (1) have a cut (6), between them, to allow the grip of the bolt head and the drive tool. The grip is achieved by positioning the extrusions (2) of the drive tool in the pockets (1) of the bolt head and vice versa. The bolt head and the drive tool have the number of pockets (1), extrusions (2), size of the pocket angle (4) and extrusion angle (5) correlated in order to achieve grip.

2. Type of bolt head with angular feature of Claim 1, further including that the pairs of pockets (1) and extrusions (2) can be from two pairs, shown in Figure 1 and Figure 3, three pairs shown in Figure 2 and Figure 3 to more than 3 pairs and that function by the same rules of operation and don't have a limit of repeating themselves on the bolt head.

3. Type of bolt head with angular feature of Claim 2 further including that the pairs of pockets (1) and extrusions (2), drive surface (3), pocket angle (4), extrusion angle (5) and cut (6) can be used on bolt heads, any other threaded assembly component or any other component to grip and drive.
